# EUROPEAN PATENT SPECIFICATION

(11) **EP 4 393 803 B1**
(45) Date of publication and mention of the grant of the patent: **06.05.2026**
(21) Application number: 23215476.5
(22) Date of filing: 11.12.2023
(51) Int. Cl.: B62K 21/14, B62K 21/16

(54) **BICYCLE HANDLEBAR STEM ASSEMBLY**
FAHRRADLENKERVORBAU
ENSEMBLE DE POTENCE DE GUIDON DE BICYCLETTE

(30) Priority: 26.12.2022 TW 111149992
(43) Date of publication of application: 03.07.2024
(73) Proprietor: J.D Components Co., Ltd., Shou Shui Hsiang, Chang Hua Hsien (TW)
(72) Inventor: FENG, PIN-CHIEH, CHANG HUA HSIEN (TW); LIN, YU-AN, CHANG HUA HSIEN (TW); HSIAO, HSUEH-CHIEN, CHANG HUA HSIEN (TW); CHEN, CHUN-HO, CHANG HUA HSIEN (TW)
(74) Representative: Straus, Alexander

(56) References cited:
- EP-A1- 3 597 519
- CN-U- 206 856 904
- TW-U- M 568 812
- TW-U- M 586 230

## Description

### BACKGROUND OF THE INVENTION

### 1. Field of the Invention

The present invention relates to bicycle components and more particularly, to a bicycle handlebar stem assembly that can enhance riding comfort and conveniently adjust the degree of shock absorption.

### 2. Description of the Related Art

As bicycles become more and more popular, the comfort of riding bicycles has gradually attracted more and more attention from consumers. In the past, the conventional handlebar stem only has the function of connecting the handlebar and the front fork stem. However, when encountering rough roads, the vibrations experienced by the front wheel are easily transmitted to the handlebars through the front fork stem, which not only causes the rider's hands to feel numb and uncomfortable, but also makes the rider's hands unable to maintain stable contact with the handlebars, and will also increase the grip load and burden on the rider's hands.

In order to solve the aforesaid problems, the current practice is to install the shock-absorbing unit in the handlebar stem, and use the shock-absorbing element to buffer the vibration transmitted from the front wheel. However, when it is necessary to adjust the shock absorption strength, the handlebar must be removed first, and a tool is used to adjust the tightening member of the shock-absorbing unit to compress the shock-absorbing element, thereby the shock absorption strength. For example, U.S. Patent No. 10167040 discloses a bicycle stem assembly with a shock-absorbing unit, which mainly uses a tool to adjust the position of the wedge, so that the wedge further adjusts the preload applied to the shock-absorbing element, thereby achieving the effect of adjusting the shock absorption strength. However, when it is necessary to adjust the shock absorption strength, the handlebar and the end cap need to be removed, so that the tool is allowed to be inserted into the handlebar base to adjust the position of the wedge. Because disassembly is cumbersome and cannot be adjusted at any time, it causes great inconvenience to users. In addition, TW M568812 discloses a bicycle handlebar shock-absorbing device that provides an opening under the handlebar base, so that the tool can be inserted into the handlebar base through the opening to adjust the strain of the shock-absorbing element without disassembling the handlebar. However, although this prior art solves the problem of cumbersome disassembly and inconvenient adjustment of shock-absorbing element, the strength of the handlebar base is actually weakened due to the opening, which will create huge safety concerns.

Document TW M 586 230 U discloses another known bicycle handlebar stem assembly and shows all the features of the preamble of independent claim 1.

### SUMMARY OF THE INVENTION

It is one objective of the present invention to provide a bicycle handlebar stem assembly, which conveniently adjusts the degree of shock absorption and maintains good structural strength.

To attain the above objective, the bicycle handlebar stem assembly comprises a connecting base, a handlebar base, an elastic member, and an adjustment component. The connecting base includes a tightening portion having a stem hole for connecting a front fork stem, a pivot portion connected to the tightening portion, and a pressure-receiving portion connected to the pivot portion. The handlebar base is pivoted to the pivot portion of the connecting base and includes an opening, a handlebar hole communicating with the opening for penetration of a handlebar, and an accommodation space communicating with the opening. The elastic member is disposed in the accommodation space and in contact with the pressure-receiving portion and the handlebar base, so that when the handlebar base is pivoted with respect to the connecting base, the elastic member is compressed between the pressure-receiving portion and the handlebar base. One end of the adjustment component presses against the elastic member to adjust the pre-pressure state of the elastic member and change the elastic coefficient of the elastic member when the elastic member is compressed between the pressure-receiving portion and the handlebar base, and the other end of the adjustment component has an axial direction staggered from the handlebar hole and passing through the opening.

It can be seen from the above that the bicycle handlebar stem assembly of the present invention allows the user to use a tool to adjust the adjustment component through the opening. By adjusting the adjustment component, the strain degree of the elastic element under pressure can be changed. The aforesaid adjustment process can be performed without disassembling any bicycle components (such as the handlebar), thereby achieving the effect of conveniently adjusting the shock-absorbing function. In addition, the location of the opening will not have a great impact on the structural strength of the handlebar base, so that the handlebar base still has good stability and safety in use.

Preferably, the adjustment component includes a pressing block pressing against the elastic member, and an adjusting bolt passing through the pressing block. A pressing force of the pressing block applied to the elastic member can be adjusted by rotating the adjusting bolt. An axial direction of the adjusting bolt is staggered from the handlebar hole and passes through the opening. In this way, the rider can change the pressing force of the pressing block by rotating the adjusting bolt without removing the handlebar.

Preferably, the handlebar base further includes a stem and an end cap detachably mounted to the stem. The stem has a first top through groove and a first transverse through hole communicating with the first top through groove. The end cap has a second top through groove and a second transverse through hole communicating with the second top through groove. The opening is formed by the first and second top through grooves, and the handlebar hole is formed by the first and second transverse through holes.

Preferably, the stem has a through hole communicating with the accommodating space and the opening. The adjusting bolt has a head portion and a screw rod connected to the head portion. The adjusting bolt passes through the through hole along the axial direction in a way that the head portion is exposed in the opening, and the screw rod is screwed to the pressing block. In this way, the pressing block is moved relative to the elastic member to change the pressing force by rotating the adjusting bolt.

Preferably, the bicycle handlebar stem assembly further includes a driving member and a sheath sleeved on the driving member and covering the opening. The driving member has a knob portion exposed outside the sheath and a connecting rod connected to the knob portion and the head portion of the adjusting blot. In this way, if the rider does not carry any tool with him, the rider can also rotate the driving member through the knob portion, so that the adjusting bolt can be rotated by the driving member, thereby achieving the effect of adjusting the shock absorption strength.

Preferably, the pressure-receiving portion of the connecting base further has a threaded hole. The adjusting bolt has a head portion pressing against the pressing block, and a screw rod connected to the head portion and threaded with the threaded hole. In this way, when the adjusting bolt is rotated, the head portion of the adjusting bolt will press against or loosen the pressing block, allowing the pressing block to adjust the pressing force.

Preferably, a block is abutted between the pressure-receiving portion of the connecting base and the handlebar base. In this way, when the handlebar base is pivoted at a larger angle relative to the connecting base, the block can prevent the handlebar base from damage caused by collision between the handlebar base and the connecting base.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a perspective view of a bicycle handlebar stem assembly according to a first embodiment of the present invention;
FIG. 2 is an exploded view of the bicycle handlebar stem assembly according to the first embodiment of the present invention;
FIG. 3 is a lateral sectional view of the bicycle handlebar stem assembly according to the first embodiment of the present invention;
FIG. 4 is a perspective view of the bicycle handlebar stem assembly according to a second embodiment of the present invention;
FIG. 5 is a lateral sectional view of the bicycle handlebar stem assembly according to the second embodiment of the present invention;
FIG. 6 is a perspective view of the bicycle handlebar stem assembly according to a third embodiment of the present invention;
FIG. 7 is an exploded view of the bicycle handlebar stem assembly according to the third embodiment of the present invention; and
FIG. 8 is a lateral sectional view of the bicycle handlebar stem assembly according to the third embodiment of the present invention.

### DETAILED DESCRIPTION OF THE INVENTION

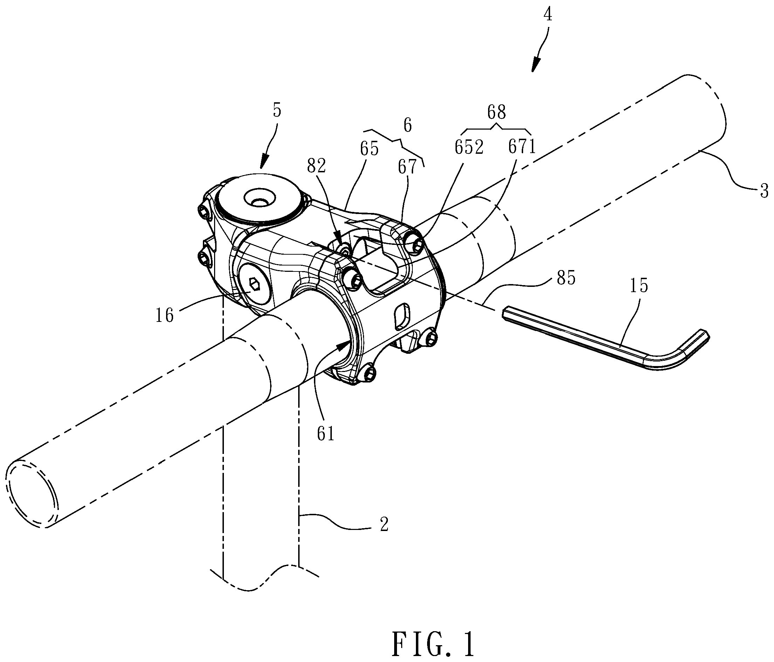

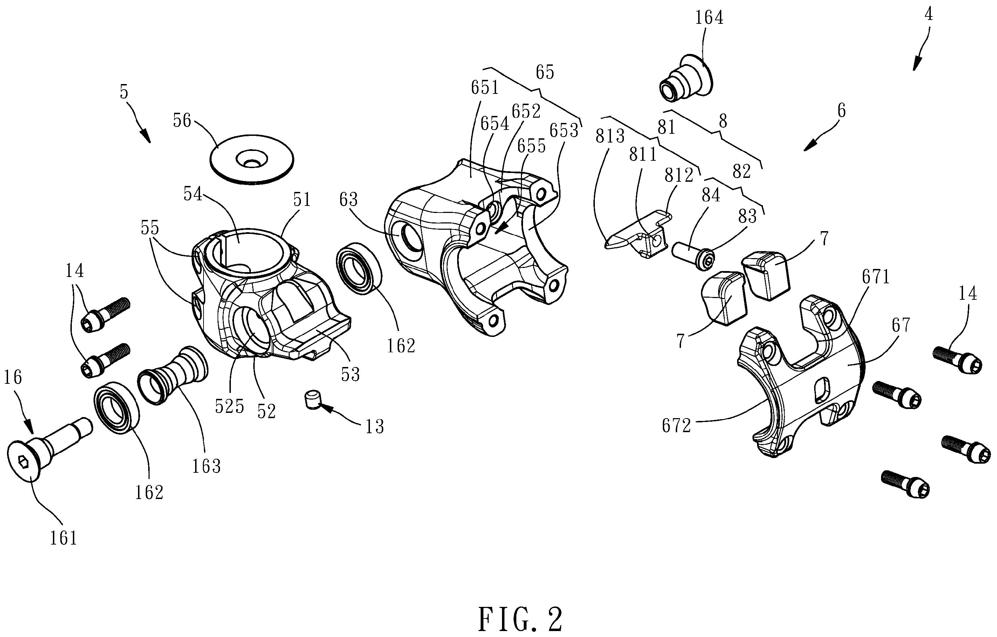

As shown in FIGS. 1 and 2, a bicycle handlebar stem assembly 4 provided by a first embodiment of the present invention comprises a connecting base 5, a handlebar base 6, two elastic members 7 (at least one is sufficient), and an adjustment component 8.

The connecting base 5 includes a tightening portion 51, a pivot portion 52 connected to the tightening portion 51, and a pressure-receiving portion 53 connected to the pivot portion 52, and a top cap 56. The tightening portion 51 has a stem hole 54 for connecting a front fork stem 2. One end of the tightening portion 51 opposite to the pivot portion 52 is provided with two lug portions 55. The lug portions 55 are fitted with bolts 14. The tightening portion 51 is pressed against the outer surface of the front fork stem 2 by locking the bolts 14, thereby fixing the connecting base 5 to the front fork stem 2. The left and right sides of the pivot portion 52 each have a pivot hole 525. The top cap 56 covers the top surface of the tightening portion 51 and is locked on the top end of the front fork stem 2 with another bolt (not shown).

The handlebar base 6 includes a stem 65 and an end cap 67. The stem 65 has a first top through groove 652 and a first transverse through hole 653 communicating with the first top through groove 652. The end cap 67 has a second top through groove 671 and a second transverse through hole 672 communicating with the second top through groove 671. The end cap 67 is assembled with the stem 65 by using four bolts 14, so that an opening 68 (see FIG. 1) is formed by the first and second top through grooves 652, 671 and located at the top side 652 of the stem 65, and a handlebar hole 61 is formed by the first and second transverse through holes 653, 672 for installation of a handlebar 3 (see FIG. 1). In addition, the stem 65 further has an accommodating space 655 communicating with the opening 68, a through hole 654 communicating with the accommodating space 655 and the opening 68, and two perforations 63 communicating with the accommodating spaces 655.

As shown in FIG. 2, the handlebar base 6 is sleeved on the pivot portion 52 and the pressure-receiving portion 53 of the connecting base 5 through the accommodating space 655 of the stem 65, and pivoted to the connecting base 5 through a pivot component 16. The pivot component 16 includes a pivot rod 161, two bearings 162, a bushing 163, and a pivot base 164. The bearings 162 are installed in the pivot holes 525. The pivot rod 161 and the pivot base 164 are locked to each other through the perforations 63 and the bearings 162. The bushing 163 is sleeved on the pivot rod 161 and the pivot base 164 and located between the bearings 162. As such, the handlebar base 6 is pivotable relative to the connecting base 5.

The elastic members 7 can be, but not limited to, made of elastic materials, such as plastic and rubber). The elastic members 7 are installed in the accommodating space 655 and in contact with the pressure-receiving portion 53 of the connecting base 5 and the stem 65. When the handlebar base 6 is pivoted relative to the connecting base 5, the elastic members 7 are compressed between the pressure-receiving portion 53 and the stem 65.

The adjustment component 8 includes a pressing block 81 and an adjusting bolt 82. The pressing block 81 has a threaded hole 811, and two sides of the pressing block 81 each have a wing 812. The wings 812 each have an inclined surface 813. The pressing block 81 presses against the elastic members7 through the inclined surfaces 813. The adjusting bolt 82 passes through the through hole 654 of the stem 65 along an axial direction 85, and further, the axial direction 85 of the adjusting bolt 82 is staggered from the handlebar hole 61 and passing through the opening 68. Furthermore, the adjusting bolt 82 has a head portion 83 exposed in the opening 68 and a screw rod 84 connected to the head portion 83 and screwed to the pressing block 81.

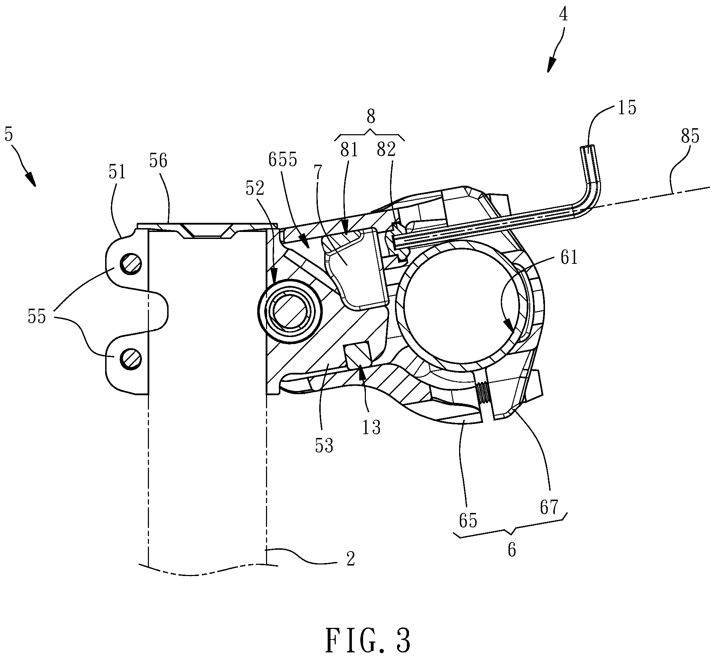

It can be seen from the above that if a rider would like to adjust the degree of shock absorption, a tool 15 (such as a hex wrench as shown in FIG. 3) is inserted into the second top through groove 671 of the end cap 67 to rotate the adjusting bolt 82. When the adjusting bolt 82 is rotated, it will force the pressing block 81 to move relative to the elastic members 7. In this way, the pressing force exerted by the pressing block 81 on the elastic members 7 is adjusted, so that the elastic coefficient of the elastic members 7 under pressure is easily changed due to the degree of strain, thus achieving the purpose of adjusting the shock-absorbing effect.

It is worth mentioning that the bicycle handlebar stem assembly 4 of the present invention further includes a block 13. The block 13 can be (but not limited to) made of elastic materials (such as plastic or rubber). The upper and lower sides of the block 13 are in contact with the pressure-receiving portion 53 of the connecting base 5 and the inner wall of the stem 65. On one hand, the block 13 can resist the connecting base 5 to prevent it from slipping easily, and on the other hand, the block 13 can prevent the handlebar base 6 from collisions caused by excessive pivoting of the handlebar base 6 relative to the connecting base 5, thereby avoiding damage to the structure of the handlebar base 6 and affecting its service life.

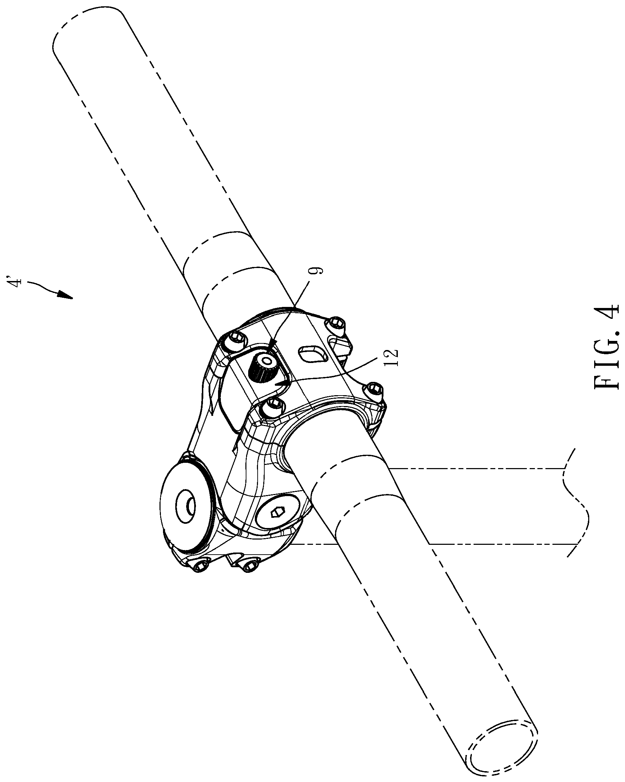

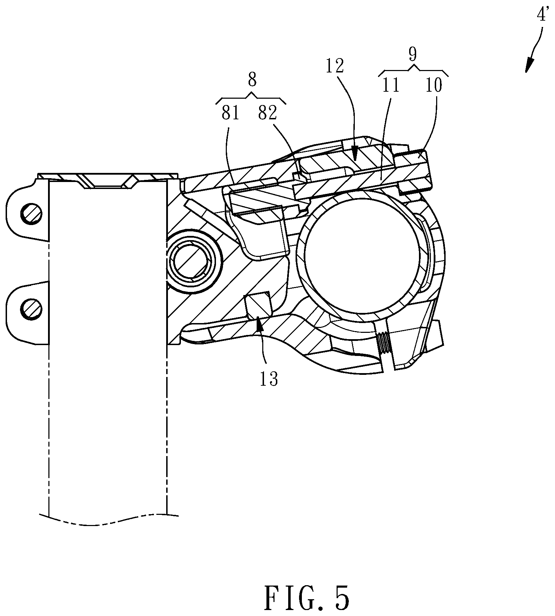

As shown in FIGS. 4 and 5, the main structure of the bicycle handlebar stem assembly device 4' provided by a second embodiment of the present invention is approximately the same with the first embodiment, but one of the differences therebetween is that the bicycle handlebar stem assembly device 4' further includes a driving member 9 and a sheath 12 sleeved on the driving member 9. The driving member 9 has a knob portion 10 exposed outside the sheath 12 and a connecting rod 11 connected to the knob portion 10 and the head portion 83 of the adjusting blot 82. The sheath 12 covers the opening 68. In this way, if the rider does not carry any tool 15 with him, the adjusting bolt 82 can be rotated through the knob portion 10, thereby achieving the effect of adjusting the shock absorption strength, and greatly enhancing convenience of riding.

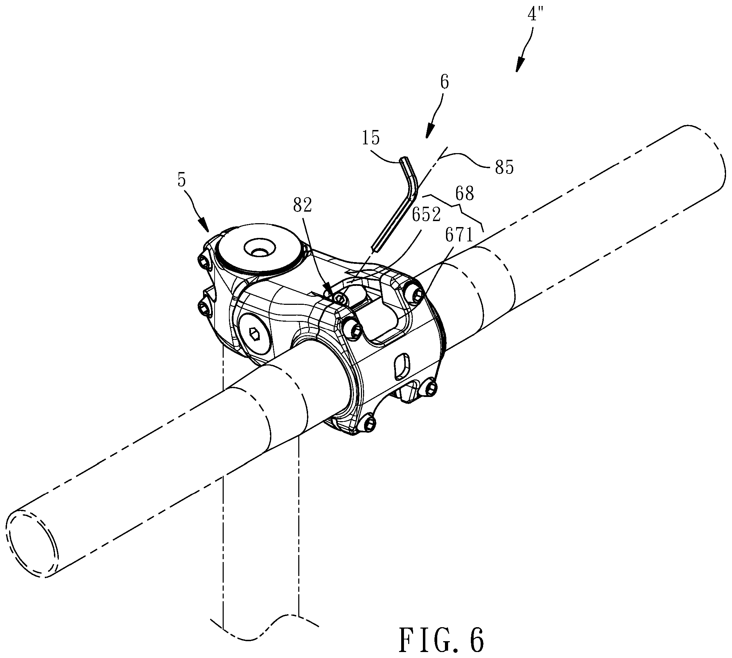

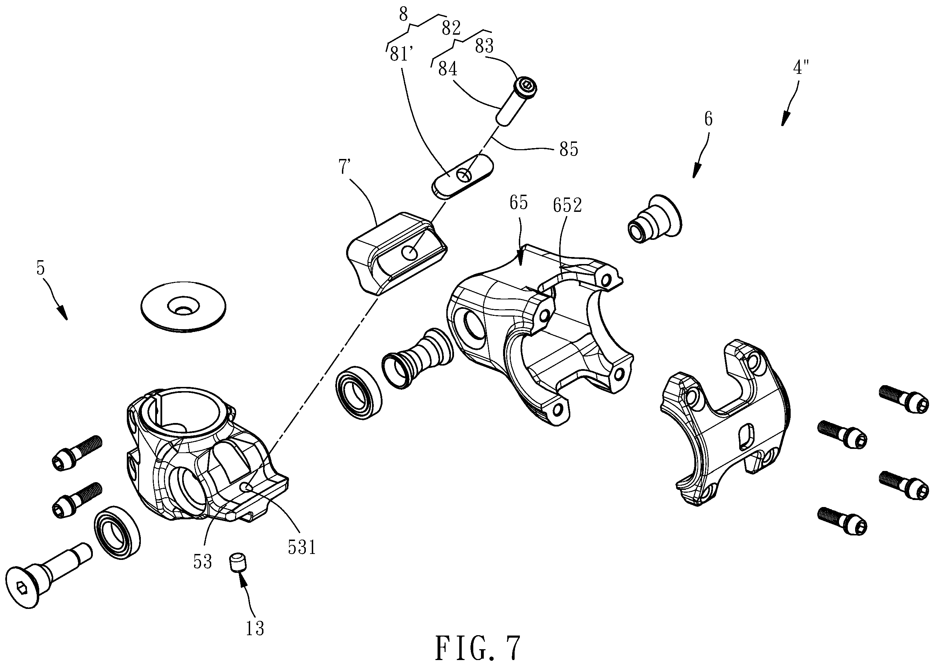

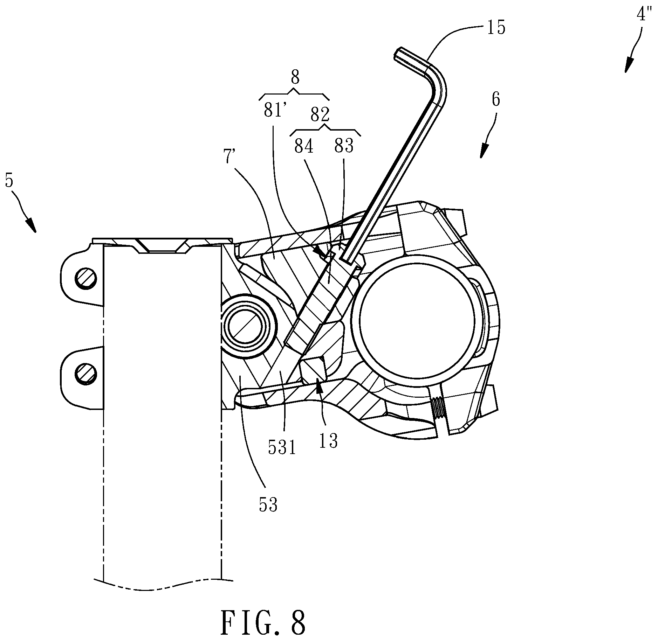

As shown in FIGS. 6 to 8, the main structure of the bicycle handlebar stem assembly device 4" provided by a third embodiment of the present invention is approximately the same with the first embodiment, but one of the differences therebetween is that the pressure-receiving portion 53 of the connecting base 5 further has a threaded hole 531. The adjusting bolt 82 passes through a plate-shaped pressing block 81' in a way that the head portion 83 of the adjusting bolt 82 presses against the pressing block 81' pressing against an elastic member 7', and the screw rod 84 of the adjusting bolt 82 is locked in the threaded hole 531. As such, when the degree of shock absorption is adjusted, the tool 15 (such as a hexagonal wrench as shown in FIG. 8) is inserted into the first top through groove 652 of the stem 65 to rotate the adjusting bolt 82. When the adjusting bolt 82 is rotated, the pressing force exerted by the head portion 83 on the pressing block 81' is adjusted. In this way, the pressing force exerted by the pressing block 81' on the elastic member 7' is adjusted, so that the strain degree of the elastic member 7' is changed accordingly, thereby achieving the purpose of adjusting the shock-absorbing effect.

As indicated above, the bicycle handlebar stem assembly 4, 4', 4"of the present invention allows the rider to use the tool 15 to adjust the adjusting bolt 82 exposed in the opening 68 without disassembling the handlebar 3 or other components (such as the end cap 67). The relative position of the pressing blocks 81, 81' is adjusted by rotating the adjusting blot 82 to change the pressing force exerted by the pressing blocks 81, 81' on the elastic members 7, 7', thereby making the elastic members 7, 7' produce different shock-absorbing effects. In addition, the location of the opening 68 does not have a great impact on the structural strength of the handlebar base 6. Compared with the prior art (TW M568812), the handlebar base 6 has better structural rigidity, so it still has good stability and safety in use.

The invention being thus described, it will be obvious that the same may be varied in many ways. Such variations are not to be regarded as a departure from scope of the invention, and all such modifications as would be obvious to one skilled in the art are intended to be included within the scope of the following claims.

## Claims

1. A bicycle handlebar stem assembly (4, 4' 4") for mounting to a front fork stem (2) and for installation of a handlebar (3), the bicycle handlebar stem assembly (4, 4', 4") comprising:
a connecting base (5) including a tightening portion (51), a pivot portion (52) connected to the tightening portion (51), and a pressure-receiving portion (53) connected to the pivot portion (52), the tightening portion (51) having a stem hole (54) for connecting the front fork stem (2);
a handlebar base (6) pivoted to the pivot portion (52) of the connecting base (5), the handlebar base (6) including an opening (68), a handlebar hole (61) communicating with the opening (68) for penetration of the handlebar (3), and an accommodation space (655) communicating with the opening (68);
an elastic member (7, 7') disposed in the accommodation space (655) and contacting the pressure-receiving portion (53) and the handlebar base (6), so that when the handlebar base (6) is pivoted with respect to the connecting base (5), the elastic member (7, 7') is compressed between the pressure-receiving portion (53) and the handlebar base (6); and
an adjustment component (8) having one end pressing the elastic member (7, 7') to adjust a pre-pressure state of the elastic member (7, 7') and change an elastic coefficient of the elastic member (7, 7') when the elastic member (7, 7') is compressed between the pressure-receiving portion (53) and the handlebar base (6), and **characterized in that** the other end provided with an axial direction (85) staggered from the handlebar hole (61) and passing through the opening (68).

2. The bicycle handlebar stem assembly (4, 4', 4") as claimed in claim 1, **characterized in that** the adjustment component (8) includes a pressing block (81, 81') pressing against the elastic member (7, 7'), and an adjusting bolt (82) passing through the pressing block (81, 81'), so that a pressing force of the pressing block (81, 81') applied to the elastic member (7, 7') is adjusted by rotating the adjusting bolt (82); an axial direction (85) of the adjusting bolt (82) is staggered from the handlebar hole (61) and passes through the opening (68).

3. The bicycle handlebar stem assembly (4, 4', 4") as claimed in claim 2, **characterized in that** the handlebar base (6) further includes a stem (65) and an end cap (67) detachably mounted to the stem (65); the stem (65) has a first top through groove (652) and a first transverse through hole (653) communicating with the first top through groove (652); the end cap (67) has a second top through groove (671) and a second transverse through hole (672) communicating with the second top through groove (671); the opening (68) is formed by the first and second top through grooves (652, 671), and the handlebar hole (61) is formed by the first and second transverse through holes (653, 672).

4. The bicycle handlebar stem assembly (4, 4') as claimed in claim 3, **characterized in that** the stem (65) has a through hole (654) communicating with the accommodating space (655) and the opening (68); the adjusting bolt (82) has a head portion (83) and a screw rod (84) connected to the head portion (83); the adjusting bolt (82) passes through the through hole (654) along the axial direction (85) in a way that the head portion (83) is exposed in the opening (68), and the screw rod (84) is screwed to the pressing block (81), so that the pressing block (81) is moved relative to the elastic member (7) to change the pressing force by rotating the adjusting bolt (82).

5. The bicycle handlebar stem assembly (4') as claimed in claim 4, **characterized in that** adjustment component (8) further comprises a driving member (9) and a sheath (12) sleeved on the driving member (9) and covering the opening (68); the driving member (9) has a knob portion (10) exposed outside the sheath (12) and a connecting rod (11) connected to the knob portion (10) and the head portion (83) of the adjusting bolt (82).

6. The bicycle handlebar stem assembly (4") as claimed in claim 2, **characterized in that** the pressure-receiving portion (53) of the connecting base (5) further has a threaded hole (531); the adjusting bolt (82) has a head portion (83) pressing against the pressing block (81'), and a screw rod (84) connected to the head portion (83) and threaded with the threaded hole (531).

7. The bicycle handlebar stem assembly (4, 4', 4") as claimed in claim 1, **characterized in that** a block (13) is abutted between the pressure-receiving portion (53) and the handlebar base (6).

## Patentansprüche

1. Fahrradlenker-Vorbau-Baugruppe (4, 4', 4") zur Befestigung an einem Vorderradgabel-Vorbau (2) und zur Montage eines Lenkers (3), worin die Fahrradlenker-Vorbau-Baugruppe (4, 4', 4") umfasst:
eine Verbindungsbasis (5) mit einem Befestigungsabschnitt (51), einem mit dem Befestigungsabschnitt (51) verbundenen Schwenkabschnitt (52) und einem mit dem Schwenkabschnitt (52) verbundenen Druckaufnahmeabschnitt (53), worin der Befestigungsabschnitt (51) eine Vorbaulochung (54) zur Verbindung mit dem Vorderradgabelvorbau (2) aufweist;
eine Lenkerbasis (6), die an dem Schwenkabschnitt (52) der Verbindungsbasis (5) angelenkt ist, worin die Lenkerbasis (6) eine Öffnung (68), ein mit der Öffnung (68) in Verbindung stehendes Lenkerloch (61) zum Durchführen des Lenkers (3) und einen mit der Öffnung (68) in Verbindung stehenden Aufnahmeraum (655) umfasst;
ein elastisches Element (7, 7'), das in dem Aufnahmeraum (655) angeordnet ist und den Druckaufnahmeabschnitt (53) sowie die Lenkerbasis (6) berührt, so dass, wenn die Lenkerbasis (6) relativ zur Verbindungsbasis (5) geschwenkt wird, das elastische Element (7, 7') zwischen dem Druckaufnahmeabschnitt (53) und der Lenkerbasis (6) zusammengedrückt wird; und
eine Einstellkomponente (8), deren eines Ende auf das elastische Element (7, 7') drückt, um einen Vorspannungszustand des elastischen Elements (7, 7') einzustellen und einen Elastizitätskoeffizienten des elastischen Elements (7, 7') zu verändern, wenn das elastische Element (7, 7') zwischen dem Druckaufnahmeabschnitt (53) und der Lenkerbasis (6) zusammengedrückt wird; und
**dadurch gekennzeichnet, dass** das andere Ende mit einer axialen Richtung (85) versehen ist, die versetzt zum Lenkerloch (61) verläuft und durch die Öffnung (68) hindurchgeht.

2. Fahrradlenker-Vorbau-Baugruppe (4, 4', 4") nach Anspruch 1, **dadurch gekennzeichnet, dass** die Einstellkomponente (8) einen gegen das elastische Element (7, 7') drückenden Druckblock (81, 81') und eine durch den Druckblock (81, 81') verlaufende Einstellschraube (82) umfasst, sodass eine auf das elastische Element (7, 7') ausgeübte Druckkraft des Druckblocks (81, 81') durch Drehen der Einstellschraube (82) eingestellt wird; und dadurch, dass eine Axialrichtung (85) der Einstellschraube (82) gegenüber dem Lenkerloch (61) versetzt ist und durch die Öffnung (68) verläuft.

3. Fahrradlenker-Vorbau-Baugruppe (4, 4', 4") nach Anspruch 2, **dadurch gekennzeichnet, dass** die Lenkerbasis (6) ferner einen Vorbau (65) und eine Endkappe (67) umfasst, die abnehmbar am Vorbau (65) angebracht ist; der Vorbau (65) eine erste obere Durchgangsnut (652) und ein erstes Querdurchgangsloch (653) aufweist, das mit der ersten oberen Durchgangsnut (652) in Verbindung steht; die Endkappe (67) eine zweite obere Durchgangsnut (671) und ein zweites Querdurchgangsloch (672) aufweist, das mit der zweiten oberen Durchgangsnut (671) in Verbindung steht; und darin, dass die Öffnung (68) durch die erste und die zweite obere Durchgangsnut (652, 671) gebildet wird, und das Lenkerloch (61) durch die erste und die zweite Querdurchgangsbohrung (653, 672) gebildet wird.

4. Fahrradlenker-Vorbau-Baugruppe (4, 4') nach Anspruch 3, **dadurch gekennzeichnet, dass** der Vorbau (65) eine Durchgangsbohrung (654) aufweist, die mit dem Aufnahmeraum (655) und der Öffnung (68) in Verbindung steht; die Einstellschraube (82) einen Kopfabschnitt (83) und eine mit dem Kopfabschnitt (83) verbundene Gewindestange (84) aufweist; und die Einstellschraube (82) die Durchgangsbohrung (654) entlang der axialen Richtung (85) derart durchläuft, dass der Kopfabschnitt (83) in der Öffnung (68) freiliegt, und die Gewindestange (84) mit dem Druckblock (81) verschraubt ist, sodass der Druckblock (81) relativ zum elastischen Element (7) bewegt wird, um die Druckkraft durch Drehen der Einstellschraube (82) zu verändern.

5. Fahrradlenker-Vorbau-Baugruppe (4') nach Anspruch 4, **dadurch gekennzeichnet, dass** die Einstellkomponente (8) ferner ein Antriebselement (9) und eine Hülse (12) umfasst, die auf das Antriebselement (9) aufgeschoben ist und die Öffnung (68) abdeckt; und darin, dass das Antriebselement (9) einen außerhalb der Hülse (12) freiliegenden Knopfabschnitt (10) und eine Verbindungsstange (11) aufweist, die mit dem Knopfabschnitt (10) und dem Kopfabschnitt (83) der Einstellschraube (82) verbunden ist.

6. Fahrradlenker-Vorbau-Baugruppe (4") nach Anspruch 2, **dadurch gekennzeichnet, dass** der Druckaufnahmeabschnitt (53) der Verbindungsbasis (5) ferner ein Gewindeloch (531) aufweist; und darin, dass die Einstellschraube (82) einen Kopfabschnitt (83) aufweist, der gegen den Druckblock (81') drückt, sowie eine Gewindestange (84), die mit dem Kopfabschnitt (83) verbunden ist und in die Gewindebohrung (531) eingeschraubt ist.

7. Fahrradlenker-Vorbau-Baugruppe (4, 4', 4") nach Anspruch 1, **dadurch gekennzeichnet, dass** ein Block (13) zwischen dem Druckaufnahmeabschnitt (53) und der Lenkerbasis (6) anliegt.

## Revendications

1. Ensemble de potence de guidon de bicyclette (4, 4', 4") destiné à être monté sur une potence de fourche avant (2) et à permettre l'installation d'un guidon (3), l'ensemble de potence de guidon de bicyclette (4, 4', 4") comprenant:
une base de connexion (5) comprenant une partie de serrage (51), une partie pivotante (52) reliée à la partie de serrage (51), et une partie de réception de pression (53) reliée à la partie pivotante (52), la partie de serrage (51) comportant un trou de potence (54) destiné à raccorder la potence de fourche avant (2);
une base de guidon (6) articulée sur la partie pivotante (52) de la base de connexion (5), la base de guidon (6) comprenant une ouverture (68), un trou de guidon (61) communiquant avec l'ouverture (68) pour le passage du guidon (3), et un espace de logement (655) communiquant avec l'ouverture (68);
un élément élastique (7, 7') disposé dans l'espace de logement (655) et en contact avec la partie de réception de pression (53) et la base de guidon (6), de sorte que lorsque la base de guidon (6) pivote par rapport à la base de connexion (5), l'élément élastique (7, 7') est comprimé entre la partie de réception de pression (53) et la base du guidon (6); et
un élément de réglage (8) dont une extrémité appuie sur l'élément élastique (7, 7') afin de régler l'état de pré-compression de l'élément élastique (7, 7') et de modifier le coefficient d'élasticité de celui-ci lorsque l'élément élastique (7, 7') est comprimé entre la partie de réception de pression (53) et la base du guidon (6); et
**caractérisé en ce que** l'autre extrémité est pourvue d'une direction axiale (85) décalée par rapport au trou du guidon (61) et passant à travers l'ouverture (68).

2. Ensemble de potence de guidon de bicyclette (4, 4', 4") selon la revendication 1, **caractérisé en ce que** l'élément de réglage (8) comprend un bloc de pression (81, 81') appuyant contre l'élément élastique (7, 7'), et un boulon de réglage (82) traversant le bloc de pression (81, 81'), de sorte qu'une force de pression du bloc de pression (81, 81') appliquée à l'élément élastique (7, 7') est ajustée en tournant le boulon de réglage (82); une direction axiale (85) du boulon de réglage (82) est décalée par rapport au trou du guidon (61) et passe à travers l'ouverture (68).

3. Ensemble de potence de guidon de bicyclette (4, 4', 4") selon la revendication 2, **caractérisé en ce que** la base de guidon (6) comprend en outre une potence (65) et un embout (67) monté de manière amovible sur la potence (65); la potence (65) comporte une première rainure traversante supérieure (652) et un premier trou traversant transversal (653) communiquant avec la première rainure traversante supérieure (652); l'embout (67) comporte une deuxième rainure traversante supérieure (671) et un deuxième trou traversant transversal (672) communiquant avec la deuxième rainure traversante supérieure (671); l'ouverture (68) est formée par les première et deuxième rainures traversantes supérieures (652, 671), et le trou de guidon (61) est formé par les premier et deuxième trous transversaux traversants (653, 672).

4. Ensemble de potence de guidon de bicyclette (4, 4') selon la revendication 3, **caractérisé en ce que** la potence (65) comporte un trou traversant (654) communiquant avec l'espace de logement (655) et l'ouverture (68); le boulon de réglage (82) comporte une partie de tête (83) et une tige filetée (84) reliée à la partie de tête (83); le boulon de réglage (82) traverse le trou traversant (654) dans la direction axiale (85) de telle sorte que la partie de tête (83) soit exposée dans l'ouverture (68), et la tige filetée (84) est vissée au bloc de pression (81), de sorte que le bloc de pression (81) est déplacé par rapport à l'élément élastique (7) pour modifier la force de pression en tournant le boulon de réglage (82).

5. Ensemble de potence de guidon de bicyclette (4') selon la revendication 4, **caractérisé en ce que** l'élément de réglage (8) comprend en outre un organe d'entraînement (9) et une gaine (12) enfilée sur l'organe d'entraînement (9) et recouvrant l'ouverture (68); l'élément d'entraînement (9) comporte une partie formant bouton (10) exposée à l'extérieur de la gaine (12) et une tige de liaison (11) reliée à la partie formant bouton (10) et à la partie formant tête (83) du boulon de réglage (82).

6. Ensemble de potence de guidon de bicyclette (4") selon la revendication 2, **caractérisé en ce que** la partie de réception de pression (53) de la base de connexion (5) comporte en outre un trou fileté (531); le boulon de réglage (82) comporte une partie de tête (83) appuyant contre le bloc de pression (81'), et une tige filetée (84) reliée à la partie de tête (83) et vissée dans le trou fileté (531).

7. Ensemble de potence de guidon de bicyclette (4, 4', 4") selon la revendication 1, **caractérisé en ce qu'**un bloc (13) est placé en butée entre la partie de réception de pression (53) et la base de guidon (6).
